# EUROPEAN PATENT APPLICATION

(11) **EP 3 961 277 A1**
(43) Date of publication of application: **02.03.2022**
(21) Application number: 21192464.2
(22) Date of filing: 20.08.2021
(51) Int. Cl.: G02B 6/122, G02B 6/136, G02B 6/138, G02B 6/12

(54) **WAVEGUIDE WITH TRAPEZOIDAL CORE**

(30) Priority: 25.08.2020 US 202063069924 P
(71) Applicant: Rohm and Haas Electronic Materials LLC, Marlborough, MA 01752 (US); DuPont Electronics, Inc., Wilmington, DE 19805 (US)
(72) Inventor: GALLAGHER, Michael K., Marlborough, 01752 (US); KONDO, Masaki, Niigata, 9503321 (JP); JOO, Jake, Marlborough, 01752 (US); RYLEY, James F., Wilmington, 19803 (US); SHEN, Yi, Marlborough, 01752 (US); WILLIAMSON, Curtis, Marlborough, 01752 (US); ZHANG, Zhebin, Marlborough, 01752 (US)
(74) Representative: Houghton, Mark Phillip

(57) **Abstract**

Provided is an optical waveguide comprising a core surrounded by a cladding, wherein the core is in the shape of a trapezoid with sidewall angles between 60° and 85° and an optoelectronic circuit comprising the optical waveguide. Operational characteristics of the optical waveguide are shown to be superior to those of incumbent devices.

## Description

### FIELD

The present invention is directed to an optical waveguide wherein the core is in the shape of a trapezoid, a method of manufacturing the optical waveguide, and an opto-electronic circuit comprising the optical waveguide.

### BACKGROUND

Light is becoming increasingly important in the transmission of data and communications. Fiber optic cables, for example, have replaced conventional electrical cables in a number of applications. Waveguides and switches are needed to capture, carry and distribute light carrying such transmissions. Optical waveguides typically include a core material and a cladding layer. They operate most efficiently when transmitted light propagates longitudinally in the core material and is contained by the core-cladding interface which generally has a lower index of refraction than the core material.

Modern photonic communication systems often require single-mode propagation of the photonic signals to achieve high data transfer rates required in advanced systems. This reduces or eliminates intermodal dispersion and thus increases possible data transmission rates by minimizing pulse spreading. The number of modes carried by a dielectric waveguide is largely determined by 2 factors: the waveguide cross-sectional dimensions and the difference between the waveguide core refractive index and the waveguide cladding refractive index ("contrast"). To limit a polymer waveguide to the propagation of a single mode, the cross-sectional size must be small - generally of a width and height of 10 microns or less. Furthermore, the refractive index difference between the core and cladding must be small - generally less than 0.010.

The size requirement for single-mode operation generally comes with some inherent problems. The alignment required for coupling of incoming and outgoing waveguides to one another becomes precarious at this size scale. Simply creating a larger waveguide with a very small contrast is not an option in real world photonic circuitry since the contrast also determines the ability of a waveguide to efficiently propagate signals around bends. A low contrast results in high signal loss in propagating through bends. Thus, it would be beneficial to develop a polymeric waveguide that can simultaneously remain single mode and propagate signals around bends with low loss while maintaining dimensions at the upper end of the single mode spectrum in order to make alignment somewhat easier and more reliable.

Another beneficial feature of optical waveguides is their potential to increase the packing density (or minimize line/space dimensions) of signal-carrying traces when compared to copper. The packing density, or minimum space in between waveguides, is limited by the eventual crosstalk between waveguides as they are moved closer and closer together. It is also a function of the refractive index contrast between the waveguide core and cladding in a given optical circuit. The continuing miniaturization of such circuits presents challenges for how these parameters can be balanced for optimum operation.

There is thus a need in the art for new optical waveguides that allow single mode operation, propagate signals around bends with low loss, and allow for high optical trace packing density.

### BRIEF DESCRIPTION OF THE DRAWINGS

FIG. 1 illustrates various non-limiting embodiments of the present invention.
FIG. 2 illustrates the effective refractive index of the 1^{st} order mode as function of sidewall angle while maintaining an equal base length to the trapezoid.
FIG. 3 illustrates the sensitivity to misalignment between an optical waveguide and a light-transmitting fiber from Examples *x* and *y.*
FIG. 4 illustrates the cross-talk between adjacent waveguides as a function of core shape and/or trapezoidal sidewall angle.

### DETAILED DESCRIPTION

As used throughout this specification, the following abbreviations shall have the following meanings, unless the context clearly indicates otherwise: °C = degree Celsius; g = gram; nm = nanometer, µm = micron = micrometer; mm = millimeter; sec. = second; and min. = minutes. All amounts are percent by weight ("wt%") and all ratios are molar ratios, unless otherwise noted. All numerical ranges are inclusive and combinable in any order, except where it is clear that such numerical ranges are constrained to added up to 100%. Unless otherwise noted, all polymer and oligomer molecular weights are weight average molecular weights ('Mw") and are determined using gel permeation chromatography compared to polystyrene standards.

The articles "a," "an," and "the" refer to the singular and the plural, unless the context clearly indicates otherwise. As used herein, the term "and/or" includes any and all combinations of one or more of the associated items. "Alkyl" refers to linear, branched and cyclic alkyl unless otherwise specified. "Aryl" refers to aromatic carbocycles and aromatic heterocycles. The term "oligomer" refers to dimers, trimers, tetramers and other polymeric materials that are capable of further curing. By the term "curing" is meant any process, such as polymerization or condensation, that increases the molecular weight of a material composition. "Curable" refers to any material capable of being cured under the conditions of use. The term "film" and "layer" are under interchangeably through this specification. The term "copolymer" refers to a polymer composed of two or more different monomers as polymerized units, and includes terpolymers, tetrapolymers, and the like. The term "trapezoid" refers to a convex quadrilateral with at least one pair of parallel sides, and the "sidewall angles" of such a structure refer to the angles made between its base and the non-parallel sides. The term "altitude" (or "height") of a trapezoid refers to the perpendicular distance between the parallel sides. The term "isosceles trapezoid" refers to a trapezoid in which a line of symmetry bisects one pair of opposite sides, or alternatively to a trapezoid wherein both legs and both sidewall angles are of the same measure.

The term "refractive index" or "index of refraction" refers to the velocity of light c of a given wavelength in empty space divided by its velocity *v* in a substance, or *n* = *c*/*v.* The term "mode," when referring to an optical waveguide as disclosed herein refers to the optical field distribution that stays constant during the propagation of light through an optical waveguide, except for an overall change in the phase and possibly the optical power. For a given optical frequency, an optical waveguide may support multiple modes, a single mode, or no modes at all (some shapes have no cutoff for the lowest order mode). The lowest-order mode has a nearly Gaussian intensity profile, while the profiles of higher-order modes are more complicated. Generally, the number of waveguide modes increases with decreasing wavelength.

The term "light transmitting fiber" or "optical fiber" refers to a flexible, transparent fiber made by drawing plastic or glass to a narrow diameter consistent with the spatial requirements of its intended use. Such fibers are used most often as a means to transmit light between the two ends of the fiber and find wide usage in fiber-optic communications, where they permit transmission over longer distances and at higher bandwidths than electrical cables. Optical fibers are used instead of metal wires because signals travel along them with less loss and are less subject to electromagnetic interference. Optical fibers used in certain applications often are of construction and dimension dictated by industry standards in the fields in which they find their primary uses. The term "vertical misalignment" refers to the offset which can occur when two or more optical elements are connected together in the construction of an optical circuit or device. As the vertical misalignment is increased between connected elements, there is generally a loss in the amount of optical signal available to traverse the circuit or device.

The "packing density" refers to the number of optical elements present within a unit dimension of an optical circuit or device. As circuit or device sophistication and performance are increased, there is generally an increase in the packing density of the associated elements. This can lead to interference, or crosstalk, between adjacent elements and an overall reduction in the performance of the optical circuit or device.

It will be understood that although the terms first, second, third, etc. may be used herein to describe various elements, components, regions, layers and/or sections, these elements, components, regions, layers, and/or sections should not be limited by these terms. These terms are only used to distinguish one element, component, region, layer or section from another element, component, region, layer or section. Thus, a first element, component, region, layer or section could be termed a second element, component, region, layer or section without departing from the teachings of the present invention. Similarly, the terms "top" and "bottom" are only relative to each other. It will be appreciated that when an element, component, layer or the like is inverted, what was the "bottom" before being inverted would be the "top" after being inverted, and vice versa. When an element is referred to as being "on" or "disposed on" another element, it can be directly on the other element or intervening elements may be present therebetween. In contrast, when an element is referred to as being "directly on" or "disposed directly on" another element, there are no intervening elements present.

The waveguides of the present disclosure are generally configured with a core and a cladding, wherein the cladding is typically comprised of an upper cladding and a lower cladding. In operation, light enters the core from a connected optical fiber and is transmitted longitudinally through the core while being totally reflected at each of the interfaces between the core and the cladding. The waveguide core can have any number of shapes that are known to one having skill in the art. These shapes include circular, square, triangular, and others. In one non-limiting embodiment of the present invention, the waveguide core is in the shape of a trapezoid.

The present invention provides an optical waveguide comprising a core surrounded by a cladding, wherein the core is in the shape of a trapezoid with sidewall angles between 60° and 85°.

In one non-limiting embodiment, the waveguide core of the present disclosure has the shape of a trapezoid with sidewall angles equal to 60°, in another non-limiting embodiment 61°, in another non-limiting embodiment 62°, in another non-limiting embodiment 63°, in another non-limiting embodiment 64°, in another non-limiting embodiment 65°, in another non-limiting embodiment 66°, in another non-limiting embodiment 67°, in another non-limiting embodiment 68°, in another non-limiting embodiment 69°, in another non-limiting embodiment 70°, in another non-limiting embodiment 71°, in another non-limiting embodiment 72°, in another non-limiting embodiment 73°, in another non-limiting embodiment 74°, in another non-limiting embodiment 75°, in another non-limiting embodiment 76°, in another non-limiting embodiment 77°, in another non-limiting embodiment 78°, in another non-limiting embodiment 79°, in another non-limiting embodiment 80°, in another non-limiting embodiment 81°, in another non-limiting embodiment 82°, in another non-limiting embodiment 83°, in another non-limiting embodiment 84°, in another non-limiting embodiment 85°.

In one non-limiting embodiment of the present invention, the waveguide core is in the shape of a trapezoid wherein the trapezoid is characterized by possessing a line of symmetry which bisects one pair of opposite sides. An alternative description of such a trapezoid is that it is characterized such that both legs and both sidewall angles are of the same measure. One of skill in the art recognizes this non-limiting embodiment as a waveguide core in the shape of an isosceles trapezoid. In another non-limiting embodiment of the present invention, the waveguide core is in the shape of a trapezoid that is not an isosceles trapezoid.

In one non-limiting embodiment of the present invention, the waveguide core is in the shape of a trapezoid wherein the trapezoid comprises a top, a bottom, and two sides. In one non-limiting embodiment, the length of the bottom of the trapezoid is greater than the length of the top of the trapezoid. In one non-limiting embodiment, the length of the bottom of the trapezoid is less than the length of the top of the trapezoid. In one non-limiting embodiment, the length of the bottom is between 1 µm and 15 µm. In one non-limiting embodiment, the length of the bottom is 1 µm, in another non-limiting embodiment 2 µm, in another non-limiting embodiment 3 µm, in another non-limiting embodiment 4 µm, in another non-limiting embodiment 5 µm, in another non-limiting embodiment 6 µm, in another non-limiting embodiment 7 µm, in another non-limiting embodiment 8 µm, in another non-limiting embodiment 9 µm, in another non-limiting embodiment 10 µm, in another non-limiting embodiment 11 µm, in another non-limiting embodiment 12 µm, in another non-limiting embodiment 13 µm, in another non-limiting embodiment 14 µm, in another non-limiting embodiment 15 µm.

In one non-limiting embodiment of the present invention, the waveguide core is in the shape of a trapezoid wherein the trapezoid comprises a top, a bottom, two sides, and a height that is the perpendicular distance between the top and bottom. In one non-limiting embodiment, the height of the trapezoid is between 1 µm and 15 µm. In one non-limiting embodiment, the height of the trapezoid is 1 µm, in another non-limiting embodiment 2 µm, in another non-limiting embodiment 3 µm, in another non-limiting embodiment 4 µm, in another non-limiting embodiment 5 µm, in another non-limiting embodiment 6 µm, in another non-limiting embodiment 7 µm, in another non-limiting embodiment 8 µm, in another non-limiting embodiment 9 µm, in another non-limiting embodiment 10 µm, in another non-limiting embodiment 11 µm, in another non-limiting embodiment 12 µm, in another non-limiting embodiment 13 µm, in another non-limiting embodiment 14 µm, in another non-limiting embodiment 15 µm.

The waveguides of the present disclosure are generally constructed such that the core and the cladding comprise different materials, and wherein the material of the core has a refractive index RI_{CORE} and the material of the cladding as a refractive index RI_{CLAD}. In one non-limiting embodiment of the present disclosure, RI_{CORE} ≠ RI_{CLAD}. In one non-limiting embodiment of the present disclosure, RI_{CORE} > RI_{CLAD}. In one non-limiting embodiment of the present disclosure, the material of the core has an RI_{CORE} between 1.20 and 1.80. In one non-limiting embodiment of the present disclosure, the material of the core has an RI_{CORE} between 1.25 and 1.80, in another non-limiting embodiment between 1.35 and 1.75, in another non-limiting embodiment between 1.40 and 1.70, in another non-limiting embodiment between 1.45 and 1.65, and in another non-limiting embodiment between 1.50 and 1.60. In one non-limiting embodiment of the present disclosure, the material of the cladding has an RI_{CLAD} between 1.0 and 1.79. In one non-limiting embodiment of the present disclosure, the material of the cladding has an RI_{CLAD} between 1.05 and 1.75, in another non-limiting embodiment between 1.10 and 1.70, in another non-limiting embodiment between 1.15 and 1.65, in another non-limiting embodiment between 1.20 and 1.60, in another non-limiting embodiment between 1.25 and 1.55, and in another non-limiting embodiment between 1.30 and 1.50, in another non-limiting embodiment between 1.35 and 1.45.

In one non-limiting embodiment of the present disclosure, RI_{CORE} - RI_{CLAD} ≤ 0.050, in another non-limiting embodiment 0.040, in another non-limiting embodiment 0.030, in another non-limiting embodiment 0.020, in another non-limiting embodiment 0.01, in another non-limiting embodiment 0.0050 in another non-limiting embodiment 0.0025, in another non-limiting embodiment 0.00125, and in another non-limiting embodiment 0.000625.

One having ordinary skill in the art will recognize that such increasingly-small differences between RI_{CORE} and RI_{CLAD}, or decreasing "contrast," tends to drive optical devices like the waveguides disclosed herein towards single-mode operation. There are practical limitations, however, to how small a contrast can be used in practice for opto-electronic circuits such as those disclosed herein. Since the RI_{CORE} / RI_{CLAD} contrast also determines the ability of a waveguide to efficiently propagate signals around bends, a low contrast results in high signal loss in propagating through bends. The trend towards increasing the density of components in opto-electronic circuits is driving the need for waveguides that can support smaller and smaller bend radii. When bend radii are on the order of fractions of millimeters, the difference in the indices of refraction is typically required to be greater than or equal to about 0.001, in some non-limiting embodiments greater than or equal to about 0.003, in some non-limiting embodiments greater than or equal to about 0.005, in some non-limiting embodiments greater than or equal to about 0.01, and in some non-limiting embodiments greater than or equal to about 0.1, and in some non-limiting embodiments greater than or equal to about 0.5.

The waveguides of the present disclosure are typically single mode over several important frequency ranges. While single-mode optical fibers do exhibit intermodal dispersion resulting from multiple spatial modes, the dispersion is generally much narrower than is found in multi-mode optical fibers. The single-mode fibers are thus better at retaining the signal fidelity over longer distances than their multi-mode counterparts and can operate at higher bandwidths. Frequencies of interest in the context of the present invention include the O-band, 1260-1360 nm, the C-band, 1530-1565 nm, and shorter wavelengths in the range of about 820-900 nm. The waveguides disclosed herein can be single mode or multimode with each of these frequency ranges. In one non-limiting embodiment of the present invention, the optical waveguide is single mode at a wavelength between 1260 nm and 1360 nm. In another non-limiting embodiment of the present invention, the optical waveguide is single mode at a wavelength between 1530 nm and 1565 nm. In another non-limiting embodiment of the present invention, the optical waveguide is single mode at a wavelength between 1500 nm and 1600 nm. In another non-limiting embodiment of the present invention, the optical waveguide is single mode at a wavelength between 820 nm and 900 nm. In another non-limiting embodiment of the present invention, the optical waveguide is single mode at a wavelength of 1310 nm. In another non-limiting embodiment of the present invention, the optical waveguide is single mode at a wavelength of 1550 nm. In one non-limiting embodiment of the present invention, the optical waveguide is multimode at a wavelength between 1260 nm and 1360 nm. In another non-limiting embodiment of the present invention, the optical waveguide is multimode at a wavelength between 1530 nm and 1565 nm. In another non-limiting embodiment of the present invention, the optical waveguide is multimode at a wavelength between 1500 nm and 1600 nm. In another non-limiting embodiment of the present invention, the optical waveguide is multimode at a wavelength between 820 nm and 900 nm.

In some non-limiting embodiments of the present invention, the waveguide core comprises an organic polymer, an organo-inorganic polymer, an inorganic polymer, or the like or combinations thereof. Suitable organic polymers include, but are not limited to, polyacrylate polymers, poly(meth) acrylate polymers, cyclobenzenes, bicyclobutenes, bisbenzocyclobutenes, benzocyclobutanes, polycarbonates, polyarylene ethers, polyesters, epoxies, polyurethanes, poly(cyclic olefins), polyimides, polynorbornenes, siloxanes, polyamides and the like, as well as mixtures thereof. In some non-limiting examples organic polymers include any of the foregoing substituted with halogens (fluorine, chlorine), deuterium or both. Suitable organo-inorganic polymers include, but are not limited to, organo-polysilsesquioxane, organo polysilica resins, and the like. Suitable organo polysilica (or organo siloxane) resins include compounds including silicon, carbon, oxygen and hydrogen atoms wherein at least a portion of the carbon atoms are attached to silicon atoms. In some non-limiting embodiments of the present invention, the waveguide core comprises one or more of the polymers disclosed herein.

In some non-limiting embodiments of the present invention, the waveguide cladding comprises an organic polymer, an organo-inorganic polymer, an inorganic polymer, or the like or combinations thereof. Suitable organic polymers include, but are not limited to, polyacrylate polymers, poly(meth) acrylate polymers, cyclobenzenes, bicyclobutenes, bisbenzocyclobutenes, benzocyclobutanes, polycarbonates, polyarylene ethers, polyesters, epoxies, polyurethanes, poly(cyclic olefins), polyimides, polynorbornenes, siloxanes, polyamides and the like, as well as mixtures thereof. In some non-limiting examples organic polymers include any of the foregoing substituted with halogens (fluorine, chlorine), deuterium or both. Suitable organo-inorganic polymers include, but are not limited to, organo-polysilsesquioxane, organo polysilica resins, and the like. Suitable organo polysilica (or organo siloxane) resins include compounds including silicon, carbon, oxygen and hydrogen atoms wherein at least a portion of the carbon atoms are attached to silicon atoms. In some non-limiting embodiments of the present invention, the waveguide cladding comprises one or more of the polymers disclosed herein.

The present invention further provides an opto-electronic circuit comprising an optical waveguide and a light-transmitting fiber, wherein the optical waveguide comprises a core surrounded by a cladding, and wherein the core is in the shape of a trapezoid with sidewall angles between 60° and 85°. Non-limiting, specific embodiments for the optical waveguide are the same as those identified in the context of the waveguide itself as disclosed herein. These include, but are not limited to, the waveguide core shape and size, the composition of the waveguide core and cladding, and the refractive indices of the waveguide core and cladding.

Efficient operation of the opto-electronic circuit disclosed herein requires connection of the optical waveguide to an appropriate light-transmitting fiber. The present waveguide structure is generally compatible with any number of light-transmitting fibers used in the optoelectronics industry and known to those with skill in the art. Non-limiting examples of light-transmitting fibers include those constructed of glass or polymeric materials and having one of a number of standard diameters. Such fibers can have core diameters of 62.5 µm, 50 µm, and 8.3 µm, and others. The 62.5-µm and 50-µm optical fibers are generally used for multi-mode operation, while the 8.3-µm optical fibers are generally used for single-mode operation.

The alignment of such 8.3-µm, single-mode optical fibers with the optical waveguides, and the overall sensitivity to misalignment between the fibers and the waveguides, is one consideration that dictates the overall efficiency of the opto-electronic circuits disclosed herein. In some non-limiting embodiments, the misalignment between the optical fibers and optical waveguides can be described as vertical misalignment. In some non-limiting embodiments, the misalignment between the optical fibers and optical waveguides can be described as horizontal misalignment. In one non-limiting embodiment of the opto-electronic circuits disclosed herein, the vertical or horizontal misalignment between the optical fibers and optical waveguides is between 0 µm and 2 µm, in another non-limiting embodiment between 0 µm and 1.5 µm, in another non-limiting embodiment between 0 µm and 1.0 µm, in another non-limiting embodiment between 0 µm and 0.5 µm, in another non-limiting embodiment 0.5 µm, in another non-limiting embodiment 1.0 µm, and in another non-limiting embodiment 1.5 µm.

As the vertical or horizontal misalignment between the optical fibers and the optical waveguides disclosed herein increases, it can generally be true that the magnitude and / or quality of the optical signals transmitted between them is reduced. The optical waveguides disclosed herein are generally less susceptible to the negative effects of horizontal misalignment with optical fibers versus other waveguides having other structures and construction. The optical waveguides disclosed herein are thus able to preserve the magnitude and / or quality of the optical signals transmitted between them and optical fibers as the vertical misalignment is increased. A non-limiting measure of the preservation of the optical signal as a function of misalignment is the percent power coupled between the waveguide and the fiber.

In one non-limiting embodiment of the opto-electronic circuits disclosed herein, the percent power coupled between the waveguide and the fiber is between 75% and 100%, in another non-limiting embodiment between 80% and 100%, in another non-limiting embodiment between 85% and 100%, in another non-limiting embodiment between 90% and 100%, in another non-limiting embodiment between 95% and 100%, in another non-limiting embodiment greater than or equal to 80%, in another non-limiting embodiment greater than or equal to 85%, in another non-limiting embodiment greater than or equal to 90%, and in another non-limiting embodiment greater than or equal to 95%.

The present invention also provides an opto-electronic circuit comprising two or more optical waveguides and two or more light-transmitting fibers, wherein the two or more optical waveguides comprise a core surrounded by a cladding, and wherein the core of each of the two or more optical waveguides is in the shape of a trapezoid with sidewall angles between 60° and 85°. Non-limiting, specific embodiments for the optical waveguide are the same as those identified in the context of the waveguide itself as disclosed herein. These include, but are not limited to, the waveguide core shape and size, the composition of the waveguide core and cladding, and the refractive indices of the waveguide core and cladding.

The construction of opto-electronic circuits of increasing complexity that is able to transmit greater quantities of higher-frequency data demands that multiple optical waveguides and multiple light-transmitting fibers are placed closer and closer together within the circuit. Such placement can be described as packing density and can be measured as the center-to-center distance between adjacent waveguide cores. The optical waveguides disclosed herein are found to support a greater packing density, or a decreased center-to-center distance between adjacent waveguides, than waveguides of other structures and geometries generally known to those having skill in the art. In one non-limiting embodiment of the opto-electronic circuits disclosed herein, the center-to-center distance between adjacent waveguides is less than or equal to 250 µm, in another non-limiting embodiment less than or equal to 100 µm, in another non-limiting embodiment less than or equal to 20 µm, in another non-limiting embodiment less than or equal to 15 µm, in another non-limiting embodiment less than or equal to 12 µm, in another non-limiting embodiment less than or equal to 10 µm, in another non-limiting embodiment 18 µm, in another non-limiting embodiment 17 µm, in another non-limiting embodiment 16 µm, in another non-limiting embodiment 15 µm, and in another non-limiting embodiment 14 µm.

As the center-to-center distance between adjacent waveguides disclosed herein decreases, it is can generally be true that the magnitude and / or quality of the optical signals transmitted through an individual waveguide (primary guide) is reduced. The optical waveguides disclosed herein are generally less susceptible to the negative effects of greater packing density versus other waveguides having other structures and construction. The optical waveguides disclosed herein are thus able to preserve the magnitude and / or quality of the optical signals transmitted through an individual waveguide with greater packing density. A non-limiting measure of the preservation of the optical signal as a function of packing density is the normalized power remaining in the primary guide.

In one non-limiting embodiment of the opto-electronic circuits disclosed herein, the normalized power remaining in the primary guide is greater than or equal to 50%, in another non-limiting embodiment greater than or equal to 60%, in another non-limiting embodiment greater than or equal to 70%, in another non-limiting embodiment greater than or equal to 80%, in another non-limiting embodiment greater than or equal to 90%, and in another non-limiting embodiment 100%.

The present invention further provides a method of manufacturing an optical waveguide having a core surrounded by a cladding and the core being in the shape of a trapezoid with sidewall angles between 60° and 85°, the method comprising steps of: depositing a bottom cladding layer onto a substrate; soft baking the substrate and bottom cladding layer; depositing a core layer onto the soft-baked substrate and bottom cladding layer; generating trapezoid with sidewall angles in the range of 60° to 85° via a lithographic process on the core layer; soft baking the substrate, bottom cladding layer, and core layer; depositing a top cladding layer onto the soft-baked substrate, bottom cladding layer, and soft-baked core layer; and curing the substrate, core, and cladding. Non-limiting, specific embodiments for the optical waveguide are the same as those identified in the context of the waveguide itself as disclosed herein. These include, but are not limited to, the waveguide core shape and size, the composition of the waveguide core and cladding, and the refractive indices of the waveguide core and cladding.

### EXAMPLES

The concepts described herein will be further illustrated in the following examples, which do not limit the scope of the invention described in the claims.

### Fabrication of Trapezoidal Waveguide Core

The waveguide core structures on bottom clad were fabricated using following method. A solution of adhesion promoter, AP9000C, was spin-coated to a 6-inch silicon wafer at 2000 rpm followed by baking at 150°C for 90 seconds. The prepared formulation for the bottom clad was filtered by 5-µm membrane, and then spin-coated on the wafer at 1350 rpm for 30 seconds. The wafer was baked on a hot plate at 105°C for 180 seconds. The clad thickness after soft-bake was 27 µm. After that, the wafer was placed in a 2.38% tetramethyl-ammonium hydroxide (TMAH) puddle for 75 seconds twice to develop the film. The developed clad was cured at 200°C for 1 hour in an inert-atmosphere oven with a nitrogen purge to keep the oxygen level lower than 100ppm. The cured clad thickness is about 21 µm.

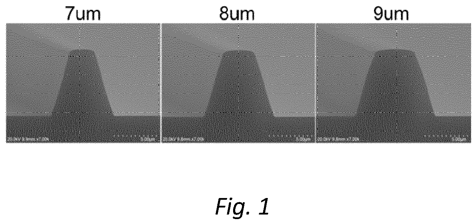

To form the waveguide core structures, the prepared formulation for the core was filtered using a 0.2-um membrane and was spin-coated on the clad layer at 840 rpm followed by baking on hotplate at 100°C for 90 seconds. The core thickness after soft bake was 10 µm. The waveguide core was then patterned by mask aligner under 400 mJ/cm² exposure dosage of broadband UV light with hard mask contact mode, and the wafer was then developed in a 2.38% TMAH puddle for 60 seconds to etch the exposed region. The wafer with developed waveguide core on bottom clad was cured at 200°C for 1 hour in the invert oven which was operated at 1°C/min ramp-up speed. Using a designed mask, a number of strip waveguide core structures on bottom clad were fabricated on the same wafer. The widths of the waveguides varied from 4 to 50 µm. The scanning electron microscope (SEM) images of fabricated trapezoidal waveguide core structures having bottom lengths of 7 µm, 8 µm, and 9 µm on bottom clad are shown in Fig. 1.

### Sidewall Angles for Single-Mode Operation

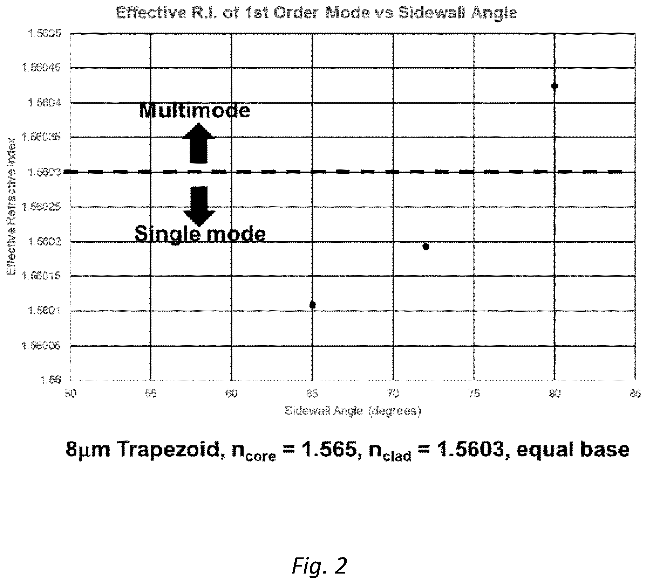

Mode calculations were performed using a complex finite difference method solver (FDM). The waveguide cross section has been divided into 200 segments in both the X and Y directions. The core, having dimensions and a refractive index as specified in the Figure 2, is immersed in a rectangular cladding of a refractive index as specified in the Figure 2. The cladding in each case is at least 100 µm in the X direction by 30 µm in the Y direction. The core and cladding have been taken as colinear. In the case of a fiber waveguide a cylindrical FDM solver has been used.

It is generally understood that the requirements of a decaying field in cladding regions, an oscillating field in the core region, and the continuity of both the field and its derivative at the core/cladding interface result in the requirement that the effective refractive index of a guided mode must fall between the core refractive index and the cladding refractive index. Fig. 2 shows that, as the sidewall angle increases, so does the effective refractive index of the first order mode. It is important to remember that, for single mode operation, the goal is to propagate only what is called the zeroeth order mode. If the 1^{st} order mode is also propagated, the device is multimode. Once that effective refractive index passes 1.5603, i.e., the refractive index of the cladding in this case, the guide starts guiding this 2^{nd} mode - it becomes multimoded. This happens somewhere in the vicinity of 77° for the refractive index contrast and specific dimensions used in this example. The sidewall angle at which the waveguide would transition from single mode to multimode is a function of both the index contrast and the cross-sectional dimensions of the specific waveguide.

### Sensitivity to Vertical Misalignment

Misalignment calculations were performed assuming the launching guide to be a Corning SMF28 fiber with an 8.2-µm core and the receiving guide to be a trapezoidal waveguide as specified in the example. Mode calculations were performed separately for both guides. Mode calculations were performed using a complex finite difference method solver (FDM). Modes propagating out of the launching guide are converted to plane waves at the fiber/free space joint interface, propagated across the free space joint and then converted back to the normal modes of the receiving guide at the free space joint/trapezoidal waveguide interface. The free space joint has been meshed at 128 slices in both the X and Y directions. The model uses a free space joint that has a width of 1 micron and is filled with a medium having a refractive index of 1.47.

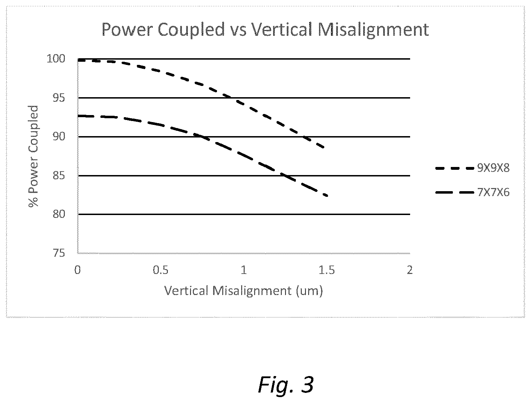

Fig. 3 illustrates the sensitivity of the power coupled between the waveguide and a connected optical fiber for several core configurations. Core size reduction can result in lost signal, even with 0% vertical misalignment. Note that, while the coupling to a 9-µm guide from a typical single-mode fiber can be near lossless, the zero-misalignment loss increases as the guide dimension decreases.

### Waveguide Crosstalk

Waveguide crosstalk calculations were performed using a modified coupled mode formalism that calculates overlap integrals between all guided modes of both waveguides involved in the model. These overlaps are then propagated down the length of the guides and recalculated as the balance of power shifts from one guide to the other. Given a particular guide design, the inter-guide spacing is varied to determine the amount of coupling and "beat length" for the specific geometry. The maximum packing density was considered to be the distance at which there is no detectable signal transfer between parallel waveguides.

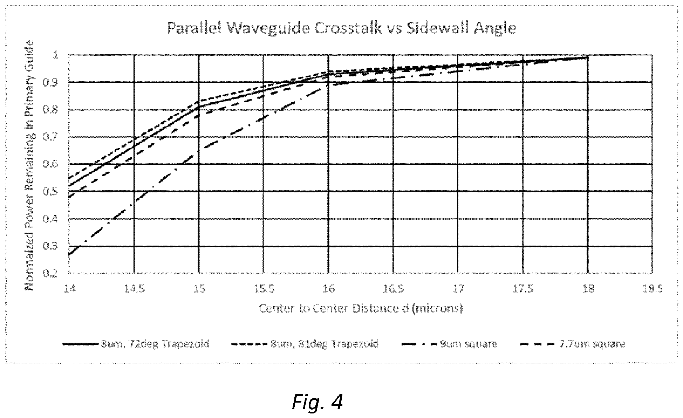

Fig. 4 illustrates the normalized power remaining in the primary waveguide as two similar guides are brought closer and closer together. The rate of loss of power remaining in the primary guide decreases as the sidewall angle departs from 90 degrees. Both square waveguides perform worse than either waveguide with a sloped sidewall. The optimum sidewall angle would be a function of both cross-sectional dimensions and refractive index contrast. This is especially true in the low cross-talk region of the plot. This represents the region of primary interest in the typical communications system.

Note that not all of the activities described above in the general description or the examples are required, that a portion of a specific activity may not be required, and that one or more further activities may be performed in addition to those described. Still further, the order in which activities are listed are not necessarily the order in which they are performed.

In the foregoing specification, the concepts have been described with reference to specific embodiments. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of invention.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims.

It is to be appreciated that certain features are, for clarity, described herein in the context of separate embodiments, may also be provided in combination in a single embodiment. Conversely, various features that are, for brevity, described in the context of a single embodiment, may also be provided separately or in any subcombination. The use of numerical values in the various ranges specified herein is stated as approximations as though the minimum and maximum values within the stated ranges were both being preceded by the word "about." In this manner, slight variations above and below the stated ranges can be used to achieve substantially the same results as values within the ranges. Also, the disclosure of these ranges is intended as a continuous range including every value between the minimum and maximum average values including fractional values that can result when some of components of one value are mixed with those of different value. Moreover, when broader and narrower ranges are disclosed, it is within the contemplation of this invention to match a minimum value from one range with a maximum value from another range and vice versa.

## Claims

1. An optical waveguide comprising a core surrounded by a cladding; wherein the core comprises an organic polymer, the cladding comprises an organic polymer, and wherein the core is in the shape of a trapezoid with sidewall angles between 60° and 85°.

2. The optical waveguide of Claim 1; wherein the optical waveguide is single mode within a frequency range, and wherein the frequency range is selected from the group consisting of 820nm to 900nm, 1260nm to 1360nm, and 1500nm to 1600nm.

3. The optical waveguide of Claim 2; wherein the core comprises a top, a bottom, and two sides; and wherein the width of the bottom is between 1 µm and 15 µm.

4. The optical waveguide of Claim 3; wherein the height of the trapezoid is between 1 µm and 15 µm.

5. The optical waveguide of Claim 1; wherein the core has a refractive index RI_{CORE}, wherein the cladding has a refractive index RI_{CLAD}, wherein RI_{CORE} is the same or different as RI_{CLAD}, and wherein each of RI_{CORE} and RI_{CLAD} is between 1.20 and 1.80.

6. The optical waveguide of Claim 1; wherein the organic polymer of the core is the same or different as the organic polymer of the cladding and is selected from the group consisting of polyacrylate polymers, poly(meth) acrylate polymers, cyclobenzenes, bicyclobutenes, bisbenzocyclobutenes, benzocyclobutanes, polycarbonates, polyarylene ethers, polyesters, epoxies, polyurethanes, poly(cyclic olefins), polyimides, polynorbornenes, siloxane, silsesquioxane, polyamide and the like, and mixtures thereof

7. An opto-electronic circuit comprising an optical waveguide and a light-transmitting fiber; wherein the optical waveguide comprises a core surrounded by a cladding, and wherein the core is in the shape of a trapezoid with sidewall angles between 60° and 85°.

8. An opto-electronic circuit comprising two or more optical waveguides and two or more light-transmitting fibers; wherein the two or more optical waveguides comprise a core surrounded by a cladding, and wherein the core of each of the two or more optical waveguides is in the shape of a trapezoid with sidewall angles between 60° and 85°.

9. A method of manufacturing an optical waveguide having a core surrounded by a cladding and the core being in the shape of a trapezoid with sidewall angles between 60° and 85°; the method comprising steps of: depositing a bottom cladding layer onto a substrate; soft baking the substrate and bottom cladding layer; depositing a core layer onto the soft-baked substrate and bottom cladding layer; generating trapezoid with sidewall angles in the range of 60° to 85° via a lithographic process on the core layer; soft baking the substrate, bottom cladding layer, and core layer; depositing a top cladding layer onto the soft-baked substrate, bottom cladding layer, and soft-baked core layer; and curing the substrate, core, and cladding.

10. The optical waveguide of Claim 1; wherein the optical waveguide is multimode within a frequency range, and wherein the frequency range is selected from the group consisting of 820nm to 900nm, 1260nm to 1360nm, and 1500nm to 1600nm.
